# EUROPÄISCHE PATENTANMELDUNG

(11) **EP 0 960 799 A1**
(43) Veröffentlichungstag der Anmeldung: **01.12.1999**
(21) Anmeldenummer: 98810497.2
(22) Anmeldetag: 28.05.1998
(51) Int. Cl.: B62D 49/08, B60K 5/12, A01D 34/10

(54) **Verfahren zur Sicherstellung des Betriebes eines Motorgeräts, fahrbares oder im Gelände aufstellbares Motorgerät mit einem Verbrennungsmotor**

(71) Anmelder: Aebli, Johann-Peter, 7114 Seewis-Pardisla (CH)
(72) Erfinder: Aebli, Johann-Peter, 7212 Seewis (CH); Bader, Hermann, 7260 Davos (CH)
(74) Vertreter: Riederer, Conrad A., Dr.

(57) **Zusammenfassung**

Bei einem Motorgerät, z.B. einem Motormäher (11) für Berggebiete oder einer Motorpumpe zum Aufstellen auf allenfalls unebenem Gelände (33), wird der Verbrennungsmotor (13) durch eine Steuerung mit Neigungsschaltern nach der Senkrechten (35) ausgerichtet (Pfeil 34'). Dabei wird vorzugsweise die Verschwenkung des Motors (13) derart ausgeführt, dass die Standfestigkeit des Geräts (11) bei ausgerichtetem Motor (13) besser ist als bei nicht ausgerichtetem.

## Beschreibung

### Technisches Gebiet der Erfindung

Die vorliegende Erfindung betrifft ein Verfahren zur Sicherstellung eines einwandfreien Betriebes eines fahrbaren oder im Gelände aufstellbaren Motorgeräts mit einem Verbrennungsmotor. Die Erfindung betrifft weiter ein fahrbares oder im Gelände aufstellbares Motorgerät mit einem Verbrennungsmotor.

### Stand der Technik

Der Betrieb eines Motorgerätes im Gelände ist mit unterschiedlichen Gefahren verbunden. Eine grosse Gefahr ist das Umstürzen des Gerätes. Weiter ist jedoch auch die Betriebssicherheit des Motors gefährdet. Bei Motormähern beispielsweise treten häufig Motorschäden auf, welche auf den Betrieb des Geräts auf geneigtem Gelände zurückzuführen ist. Durch die stetige Neigung des Motors in einer oder in der anderen Richtung ist nicht dauernd eine ausreichende Schmierung gewährleistet. Schmieröl kann sogar infolge der Schräglage bei der Ölstandkontrollöffnung austreten. Das Benzinniveau im Vergaser ist, wie im Tank, grossen Schwankungen unterlegen, so dass die Verbrennung nicht optimal geschieht, auch nicht optimal einstellbar ist. Ähnliche Probleme treten z.B. bei Gokarts aufgrund der Zentripetalkraft in den Kurven auf.

### Aufgabe der Erfindung

Es ist deshalb Aufgabe der Erfindung, beim Stand der Technik vorliegende Nachteile zu überwinden. Es soll insbesondere der Betrieb des Motors auch bei Einsatz des Gerätes in Hanglagen bzw. bei rasanten Kurvenfahrten einwandfrei gewährleistet sein. Ein weitere Aufgabe der Erfindung ist, die Standfestigkeit des Gerätes zu erhöhen.

### Beschreibung der Erfindung

Erfindungsgemäss wird dies dadurch erreicht, dass der laufende Motor je nach der Richtung der auf das Gerät wirkenden Schwer-/Fliehkraft wenigstens um eine Achse verschwenkt wird und dadurch seine Lage auf die Richtung der auf das Gerät wirkenden Kraft wenigstens annähernd ausgerichtet wird. Bei einem erfindungsgemässen Gerät ist demnach eine Einrichtung zum Verschwenken des Motors abhängig von der Richtung der auf das Gerät wirkenden Schwer-/Fliehkraft vorgesehen.

Durch die Ausrichtung des Motors in die Senkrechte entsprechend der Schwerkraft, bzw. durch das Neigen des Motors zum Zentrum einer gefahrenen Kurve hin, wird die Lage des Motors bezüglich der Schwerkraft, oder allenfalls bezüglich der Überlagerung von Schwerkraft und Fliehkraft, in einer möglichst konstanten Lage gehalten. Dadurch geschieht die Schmierung und die Vergasung wie auch die Verbrennung unter nahezu identischen Bedingungen, egal wie steil das Gelände ist, in welchem das Gerät benützt wird oder wie stark die Fliehkraft auf das Gerät wirkt.

Vorteilhaft wird der Motor derart verschwenkt, dass die Standfestigkeit des Geräts optimiert wird. Dies geschieht, wenn der Schnittpunkt zwischen einer parallel zur Schwer-/Fliehkraft gerichteten Linie durch den Schwerpunkt des Geräts einerseits und einem Standbereich des Geräts andererseits durch die Verschwenkung des Motors an das Zentrum des Standbereichs angenähert wird. D.h. der Motor, und allenfalls weitere Teile des Geräts mit diesem, sind in verschwenkter Lage gegen den Hang oder gegen das Zentrum der Kurve verschwenkt, wobei die Schwenkachse vorteilhaft möglichst in Bodennähe ist. Eine solche Schwenkachse kann sogar unter dem Boden liegen, ohne dass die Bodenfreiheit eines Gefährts darunter leidet, wenn die Verschwenkung durch eine Verschiebung entlang einer gewölbten Kurve erreicht wird. Durch eine unter der Ebene des Standbereichs liegende Schwenkachse kann die Verschiebung des Schwerpunktes des übrigen Geräts sogar kompensiert werden.

Bei einem Gefährt, bei welchem der Motor auf einem Chassis oder Support angeordnet ist, welcher Support mit den Rädern verbunden ist und sich daher nach dem Boden ausrichtet, wird vorteilhaft der Motor gegenüber dem Support verschwenkt. Bei einem im Gelände aufstellbaren Gerät kann auch der Motor, allenfalls mit einem Support zusammen, gegenüber dem Gelände verschwenkt werden. Dies z.B. durch hydraulische Stützbeine, mit welchen der Support am Boden abgestützt ist.

Wenn die Schwenkachse oder der Drehpunkt des Motors nahe der Fläche des Standbereichs liegt, erfolgt eine Verschwenkung des Motors derart, dass der Schwerpunkt in jeder Lage nahezu mittig zwischen die Abstützungen des Motors fällt. Bei einem Motormäher, welcher im Gelände meist quer zur Hangneigung gefahren wird, liegt dadurch bei einer Verschwenkung des Motors um eine Achse parallel zur Fahrtrichtung unabhängig von der Hangneigung der Schwerpunkt immer zwischen den Rädern.

Vorteilhaft ist eine oder mehrere hydraulische Pumpen am Motor vorgesehen. Mit diesen werden wenigstens ein damit verbundener hydraulischer Motor für Antriebsräder und/oder ein hydraulischer Motor oder Kolben für ein Arbeitsgerät und/oder wenigstens ein hydraulischer Motor oder Kolben für die Verschwenkung des Motors betrieben. Dadurch ist die Verbindung zwischen dem schwenkbaren Motor und den durch diesen angetriebenen nicht mitschwenkenden Teilen durch Schläuche und Kabel verbindbar, so dass eine Verschwenkung ohne komplizierten technischen Aufwand realisierbar ist. Die Hydraulik hat weiter die ihr eigenen Vorteile wie sanfte, stufenlose und individuelle Steuerbarkeit der Aggregate, elektronische Steuerbarkeit, Anpassungsfähigkeit an unterschiedliche Funktionen (z.B. Mähbalkenantrieb, Heuwenderantrieb, Schneeschleuderantrieb an einem einzigen Motorgerät). Anstelle der Hydraulik ist auch eine Pneumatik oder ein Stromaggregat mit Elektromotoren denkbar.

Ist das Gerät mit einer Versteilpumpe und einer Füllpumpe für die Versteilpumpe ausgerüstet, so ist für die Verschwenkung des Motors vorteilhaft wenigstens ein von der Füllpumpe gespeister Kolben oder Hydraulikmotor vorgesehen. Die Füllpumpe liefert einen praktisch konstanten Druck, so dass die Verschwenkung mit einer konstanten Geschwindigkeit ausgeführt wird. Für das Arbeitsgerät ist vorteilhaft eine Zahnradpumpe vorgesehen, da diese eine von der Umdrehungszahl des Antriebs abhängige, jedoch konstante und hohe Leistung erbringt. Die Verstellpumpe ist zweckmässigerweise für den Radantrieb vorgesehen, so dass das Gefährt bei einer konstanten Motorumdrehungszahl mit unterschiedlichen Geschwindigkeiten gefahren werden kann.

Vorteilhaft ist die Steuerung der Verschwenkung durch Neigungsschalter kontrolliert. Dadurch wird die Ausrichtung des Motors automatisch aufgrund der Abweichung aus dem Lot beziehungsweise aus der Kraftrichtung aus Flieh- und Schwerkraft erreicht.

Vorteilhaft ist wenigstens ein Sensor zur Erkennung der Position des Motors gegenüber dem Support und eine elektronischen Steuerung der Verschwenkung vorgesehen. Mit diesen ist zweckmässigerweise unabhängig von den Neigungsschaltern eine Endposition und vorzugsweise auch eine Mittelposition definiert. In einer Endstellung wird der Neigungsschalter, welcher ein Signal zur weiteren Verschwenkung des Motor über diese Endstellung hinaus gibt, deaktiviert.

Vorteilhaft ist der Motor mit Rollen auf einer gewölbten Führungsschiene gelagert. Diese kann einen sehr tiefen Mittelpunkt aufweisen, so dass die Bodenfreiheit gewährt bleibt, während der Motor um eine Achse in Bodennähe verschwenkbar ist. Zudem lässt sich der Motor durch einfaches Verschieben auf der Führungsschiene, z.B. mit einem zweiseitigen oder zwei einseitigen hydraulischen Kolben, einer Schnecke, einem Zahnrad mit Zahnstange oder einem Reibrad, verschwenken. Die Wölbung der Führungsschiene ist auf die Platzverhältnisse um den Motor und die maximal notwendige Verschwenkbarkeit abgestimmt.

Bei einem fahrbaren Gerät sind u.U. die Bedienungs- und Steuerelemente vorteilhaft um eine in Fahrtrichtung verlaufende Achse zusammen mit dem Motor verschwenkbar. Dadurch sind, z.B. bei einem einachsigen Motormäher, die Bedienungselemente wie Lenker und Schalter immer entsprechend der aufrecht hinter dem Mäher hergehenden Bäuerin ausgerichtet. Dies hat einen positiven Einfluss auf die Körperhaltung der Geräteführerin.

Vorteilhaft sind die Bedienungs- und Steuerelemente zusammen mit dem durch den Motor angetriebenen Arbeitsgerät um eine quer zur Fahrtrichtung verlaufende Achse gegenüber dem Motor verschwenkbar. Dadurch lässt sich der Motor zusammen mit seinem Support auch bei Fahrten in Neigungsrichtung des Geländes bezüglich der Senkrechten ausrichten.

Hat das Gerät angetriebene Räder, so ist vorteilhaft eine für jedes einzelne Rad individuelle Steuerung des Antriebs abhängig von der Richtung der auf den Motor wirkenden Schwerkraft vorgesehen. Dadurch ist es möglich, der Tendenz des quer zum Steilhang fahrenden Gefährts zur Falllinie hin abzudrehen, entgegenzuwirken.

Vorteilhaft sind Neigungsschalter für die Steuerung der Ausrichtung des Motors vorgesehen. Diese steuern die entsprechenden Ventile zu einem Kolben oder Hydraulikmotor, so dass der Verbrennungsmotor bei einer Abweichung von der Parallelen zur Schwer/Fliehkraft sofort wieder in eine parallele Stellung gebracht wird.

Vorteilhaft sind Sensoren zur Erfassung der Mittenstellung und/oder Endstellung der Verschwenkung des Motors vorgesehen. Mit diesen Sensoren wird, sobald der Motor in einer Endstellung ist, die Steuerung durch den aktiven Neigungsschalter überbrückt, so dass in der Endstellung der Kolben oder Motor zur Verschwenkung des Verbrennungsmotors in diese Richtung deaktiviert wird. Eine neutrale Stellung wird vorzugsweise aufgrund der Sensoren eingestellt.

Beispiele für die Anwendung der erfindungsgemässen Verschwenkung des Verbrennungsmotors sind: Motormäher, Kleintraktoren für Golfplätze, Rebbergtraktoren, Transporter, Geländefahrzeuge, Heuraupen, Schneeschleudern, Motorschubkarren, Baumaschinen, Gokarts, Rennautos, Pistenfahrzeuge, Wasserpumpen, Luftpumpen, Stromaggregate. Je nach Arbeitseinsatz des Gerätes ist eine Verschwenkung zusammen mit dem Support oder gegenüber dem Support zweckmässig, und ist auch eine Verschwenkung in einer oder der anderen Richtung sinnvoll. Gelegentlich ist auch eine Verschwenkung in zwei Richtungen zweckmässig, so bei einem Gefährt mit auswechselbarem Arbeitsgerät, z.B. mit Mähbalken und Heuraupe. Gemäht wird nämlich quer zum Hang und Heumahden werden in der Falllinie angelegt. Daher muss beim Mähen eine Verschwenkung des Verbrennungsmotors in die andere Richtung geschehen als beim Zusammenrechen des Heus. Bei Pumpen und Stromaggregaten, welche auf den Gelände aufgestellt werden, werden vorzugsweise wenigstens drei Stützbeine soweit ausgefahren bis das Gerät im Lot ist.

### Kurzbeschrieb der Figuren

Es zeigt:
- Fig. 1: eine schematische Darstellung eines Motormähers,
- Fig. 2 bis 5: der Motormäher gern. Figur 1 in unterschiedlich verschwenkten Positionen, nämlich

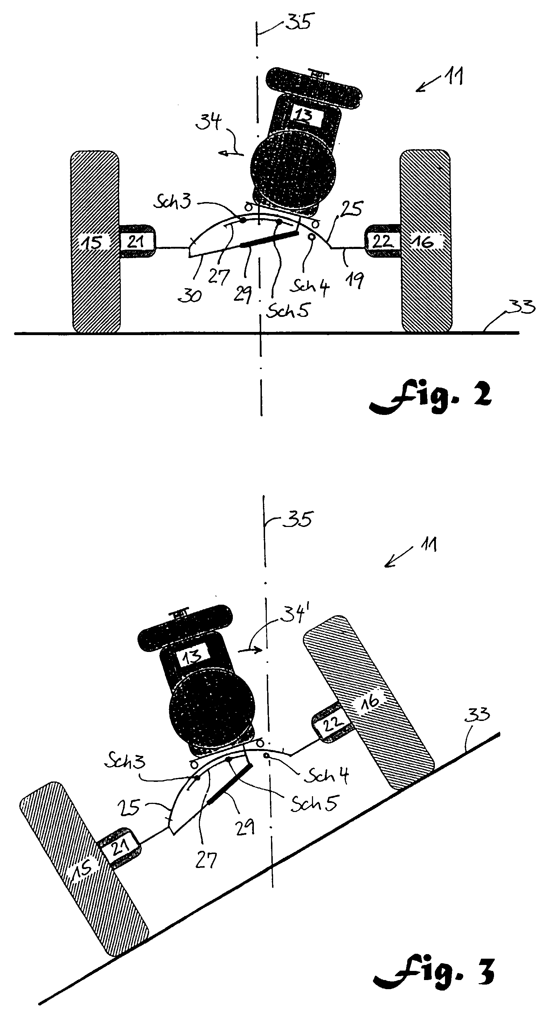

- Fig. 2: gegenüber der Vertikalen nach rechts verschwenkt,

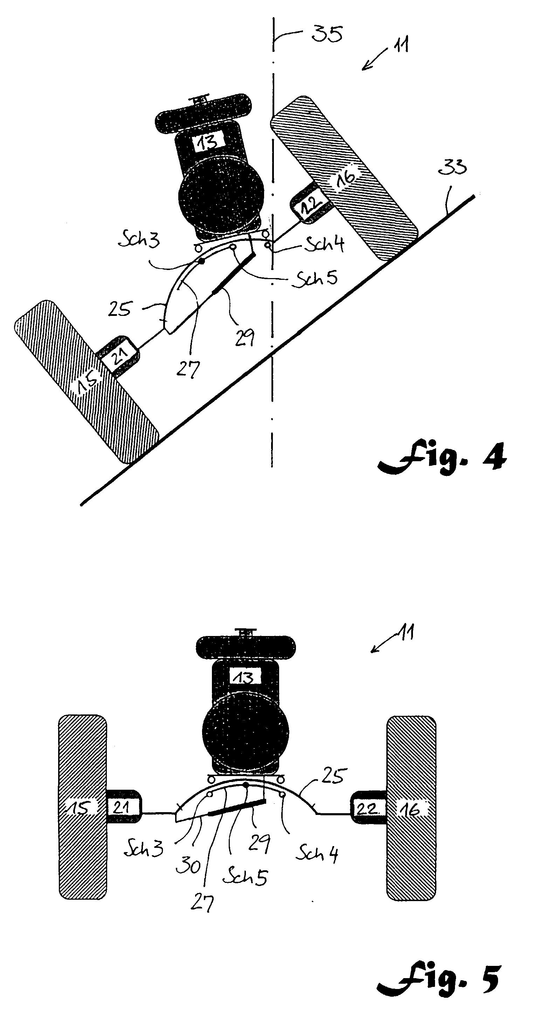

- Fig. 3: gegenüber der Vertikalen nach links, jedoch gegenüber der Symmetrieebene des Mähers nach rechts verschwenkt,

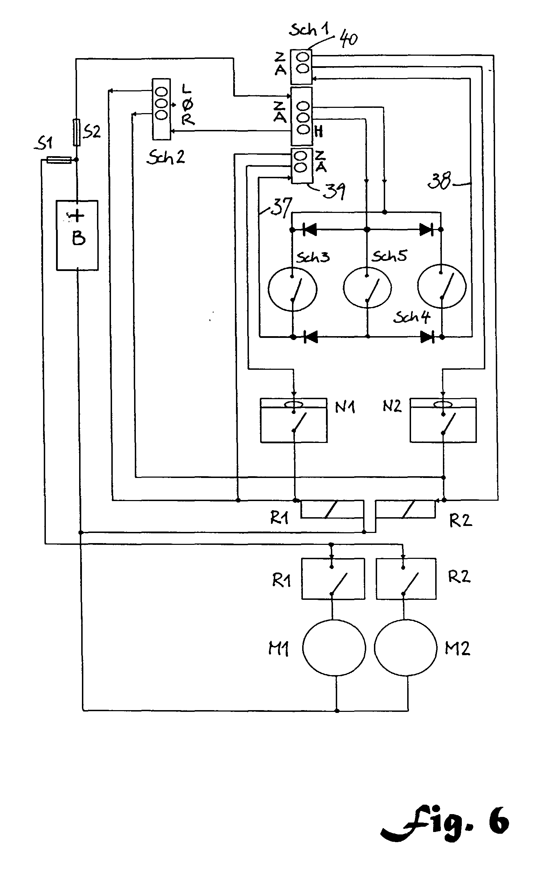

- Fig. 4: in Endstellung rechts,
- Fig. 5: in Mittelstellung,

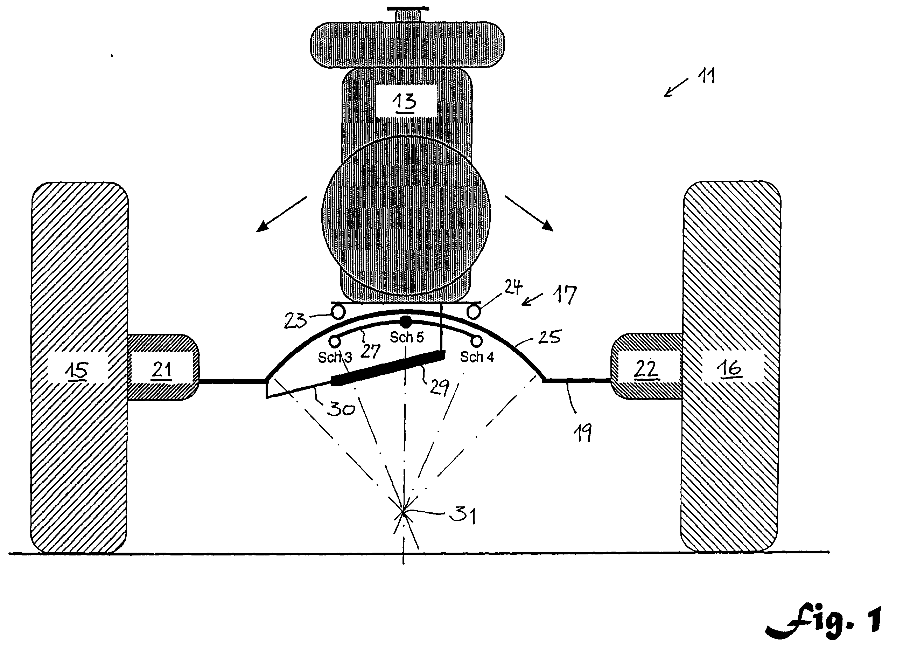

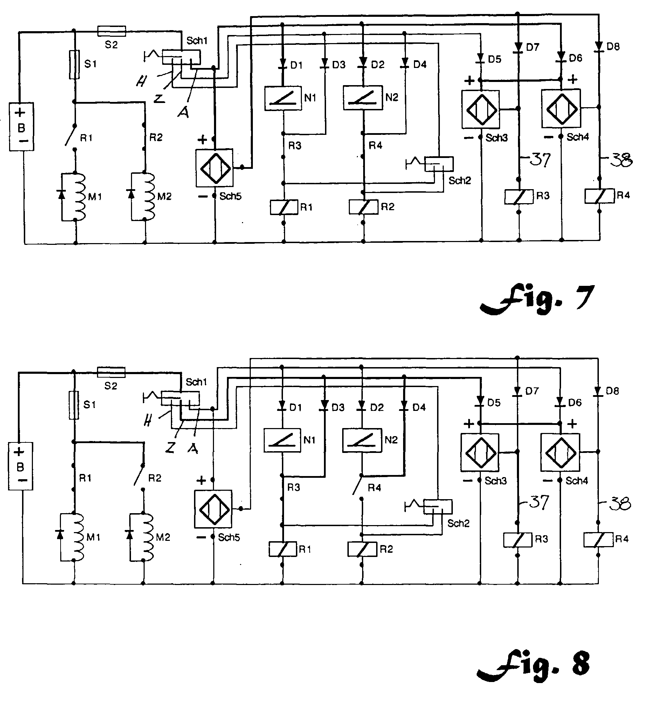

- Fig. 6: ein Schaltschema für die Steuerung der Motor-verschwenkung beim Mäher gemäss Figur 1
- Fig. 7: ein anderes Schaltschema für die Steuerung der Verschwenkung, in einer Schaltstellung wie es bei einem Mäher in der Stellung gemäss Figur 3 und Automatikeinstellung der Fall ist,

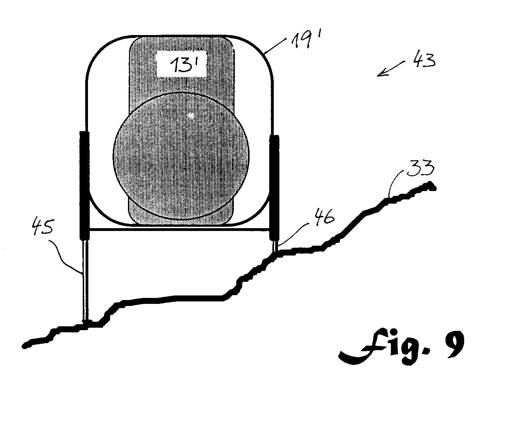

- Fig. 8: das Schaltschema gem. Figur 7, jedoch in einer Schaltstellung wie es bei einem Mäher in der Stellung gemäss Figur 2 und automatischer Mittelstellung der Fall ist,
- Fig. 9: eine schematische Darstellung eines Stromaggregats mit Stützbeinen.

### Beschrieb der Ausführungsbeispiele

Der Motormäher 11 in Figur 1, dessen Darstellung als eine Prinzipskizze zu verstehen ist, und dessen Ausführung unterschiedliche Formen haben kann, weist eine Erzeugereinheit 13, gewöhnlich eine durch einen Benzinmotor angetriebene Hydraulikpumpe, zwei Antriebsräder 15,16, und einen Verschwenkmechanismus 17 am Chassis 19 des Mähers 11 auf. Für den Antrieb der Räder 15,16 ist bei jedem Rad ein hydraulischer Radantrieb 21,22 vorgesehen. Die Hydraulikpumpe der Erzeugereinheit 13 treibt die Radantriebe 21,22 an. Solche Antriebe sind bei Mähern und anderen landwirtschaftlichen Geräten und Fahrzeugen sowie Pistenfahrzeugen etc. bereits Stand der Technik, weshalb auf den hydraulischen Antrieb im einzelnen nicht eingegangen zu werden braucht. Analog dazu könnte die Erzeugereinheit 13 auch ein Stromaggregat oder eine Pressluftpumpe aufweisen und die Räder 15,16 und andere angetriebene Teile des Mähers 11 entsprechend elektrisch oder pneumatisch angetrieben werden.

Die relativ schwere Erzeugereinheit 13 ist durch den Schwenkmechanismus 17 verschwenkbar. Dazu ist sie mit Rollen 23,24 auf einer gebogenen Führungsschiene 25 gelagert. Die Rollen 23,24 garantieren in der Praxis mit weiteren Rollen zusammen, dass die Erzeugereinheit 13 leicht verschiebbar ist, jedoch nicht aus der Führungsschiene 25 springen kann. Die Führungsschiene 25 ist Teil des Chassis 19. Am Chassis 19 ist ein Schaltglied 27 angeordnet, welches die Schalter Sch3 bis Sch5 schaltet. Das Schaltglied 27 und die Schalter Sch3 bis Sch5 sind sehr unempfindlich, wenn es sich um eine Metallstange und um drei Näherungssensoren handelt, welche die Anwesenheit oder Abwesenheit der Metallstange wahrnehmen. Zur Verschwenkung der Erzeugereinheit 13 ist ein hydraulischer Zylinder 29 vorgesehen, welcher mit der Erzeugereinheit 13 und dessen Stössel 30 oder Kolben mit dem Chassis 19 verbunden ist. Durch Öffnen des einen Ventils wird die Erzeugereinheit 13 gegenüber dem Chassis 19 nach rechts, durch Öffnen des anderen Ventils nach links verschwenkt. Für die Steuerung der Ventile sind die drei Näherungsschalter Sch3,Sch4,Sch5 und zwei Neigungsschalter N1,N2 vorgesehen. Die Arbeitsweise der Steuerung ist später beschrieben. Die Näherungsschalter oder Sensoren Sch3 und Sch4 sind in der dargestellten Mittelposition deaktiviert, lediglich der mittlere Sensor Sch5 ist durch das Schaltglied 27 aktiviert. Die in der Figur 1 nicht dargestellten Neigungsschalter N1 und N2 schalten je nach Stellung der Erzeugereinheit 3 zur Senkrechten ein oder aus.

Die Schwenkachse 31 liegt im Zentrum des Bogens der Führungsschiene 25 und in Bodennähe. Mit der dargestellten Geometrie ist eine Verschwenkung von insgesamt ca. 45 Grad vorgesehen. Winkel von dreissig Grad oder mehr nach beiden Seiten hin sind jedoch ohne Beeinträchtigung z.B. der Bodenfreiheit möglich. Zwischen der Mittelstellung und der Endstellung ist ein Winkel von gut 20 Grad eingezeichnet, wobei der Winkel, welcher vom mittleren Sensor Sch5 von seiner mittleren stellung bis zu seiner deaktivierten Stellung gleich gross ist, wie der Winkel zwischen der Stellung des Sensors Sch3 oder Sch4 in Mittelstellung bis zur Endstellung. Der Schwenkbereich umfasst den Winkel zwischen der deaktivierten Stellung des Sensors Sch5 auf der einen und auf der anderen Seite des Schaltgliedes 27.

Steht nun die Erzeugereinheit 13 nach rechts verschwenkt auf dem auf horizontalem Untergrund 33 stehenden Chassis 19, wie dies in Figur 2 dargestellt ist, steht der Verbrennungsmotor der Erzeugereinheit 13 nicht mehr im Lot. Die Neigungsschalter N1 und N2 reagieren jedoch auf die Abweichung von der Senkrechten 35 und öffnen das Ventil des Zylinders 29, welches eine Verschwenkung nach links (Pfeil 34) bewirkt. In gleicher Lage der Erzeugereinheit 13 bezüglich des Chassis 19, jedoch bezüglich der Vertikalen 35 nach links verschwenkt, weil der Untergrund 33 stärker geneigt ist, als die Neigung, welche die Verschwenkung korrigiert, reagiert der andere Neigungsschalter N2 und steuert die Ventile des Zylinders 29 so, dass der Verbrennungsmotor nach rechts (Pfeil 34') verschenkt und senkrecht gestellt wird. Die Verschwenkung in beide Richtungen ist solange möglich, wie der mittlere Sensor Sch5 aktiviert ist.

Ist das Gelände 33, wie in Figur 4 dargestellt, steiler als der grösstmögliche Verschwenkungswinkel zwischen Chassis 19 und Erzeugereinheit 13, so gerät die Erzeugereinheit 13 in eine Endposition. In dieser ist es wünschenswert, dass das geöffnete Ventil des Zylinders 29, welches eine Verschwenkung nach rechts bewirken sollte, nicht weiter geöffnet bleibt, sondern trotz aktiviertem Neigungsschalter geschlossen wird. Dies geschieht über die Sensoren Sch3 bis Sch5, von welchen in dieser Lage lediglich der die Verschwenkung nach links freigebende Sensor Sch3 aktiviert ist.

Zudem ist es wünschenswert, dass das Gerät in eine Normalposition gestellt werden kann, wie sie in Figur 5 dargestellt ist, und dies unabhängig von der Neigung des Untergrundes. In dieser Stellung sind zweckmässigerweise die beiden Sensoren Sch3 und Sch5 deaktiviert.

Figur 6 zeigt ein mögliches Schaltschema, mit welchem die gewünschte Funktionsweise erreicht wird. Ein Schalter 1 weist drei Positionen auf: Die Position H für Handbetrieb, die Position A für Automatikbetrieb der Verschwenkung, und Position Z für die automatische Mittelstellung, d.h. das Verschwenken der Erzeugereinheit 13 in die mittlere Normalposition unabhängig von der Neigung des Chassis. Bei Position H des Schalters Sch1 wird die Spannung von der Batterie B auf den Schalter Sch2 geleitet, welcher wieder drei Positionen hat: R für Verschwenken nach rechts, 0 für keine Verschwenkbewegung und die Position L für eine Verschwenkung nach links. In den Positionen L und R des Schalters Sch2 werden die Magnetventile M1 und M2 des Zylinders 29 direkt über die entsprechenden Relais R1 und R2 angesteuert.

In der Position A des Schalters Sch1 wird Spannung auf alle drei Näherungsschalter Sch3, Sch4, Sch5 gegeben, wobei die Annäherung des Schalters an das Schaltglied 27 (siehe Figuren 1 bis 5) diesen aktiviert, d.h. schliesst. Zudem wird in dieser Position A die links und die rechts von den Sensoren Sch3 bis Sch5 weggehenden Ausgangsspannungen in den Leitern 37 und 38 in zwei Schaltstellen 39,40 mitgeschaltet. In der Position A wird die Ausgangsspannung auf die Neigungsschalter N1 und N2 gegeben, in der Position Z auf die Relais R1 und R2.

Ist nun der mittlere Schalter Sch5 aktiviert, ist Spannung auf beiden Leitern 37 und 38. Eine Korrektur der Lage des Erzeugereinheit wird nun allein aufgrund der Stellung der Neigungsschalter N1,N2 getätigt. Sind beide Neigungsschalter offen, geschieht keine Korrektur. Ist der Neigungsschalter N2 aufgrund einer Abweichung der Erzeugereinheit von der Senkrechten nach links (Fig. 3) geschlossen, wird das Ventil M2 aktiviert und der Kolben 30 entsprechend aus dem Zylinder gestossen. Dadurch wird eine Verschwenkung nach rechts erreicht, bis beide Neigungsschalter wieder offenstehen, oder bis der Sensor Sch5 nicht mehr aktiviert ist. In der Endstellung (Fig. 6) ist dies der Fall. Dann ist lediglich noch der Schalter Sch3 aktiviert, was lediglich eine Verschwenkung nach links erlaubt, und dies nur bei Aktivierung des Neigungsschalters N1. Solange also in der Endstellung rechts der Neigungsschalter N1 offen ist, geschieht keine Verschwenkung. Auf dem Neigungschalter N2 ist keine Spannung, da weder der Sensor Sch4 noch Sch5 aktiviert ist.

Bei der Stellung Z des Schalters Sch1 sind lediglich die beiden Sensoren Sch3 und Sch4 unter Spannung. Mit Dioden ist der Sensor Sch5 von den Leitern zu und von den Sensoren Sch3 und Sch4 getrennt. Die Ausgangsspannung dieser Sensoren ist über die Schaltstellen 39 und 40 auf die Relais R1 und R2 geleitet. Daher wirkt sich eine Aktivierung des Sensors Sch3 in einer Verschwenkung nach links, eine Aktivierung des Sensors Sch4 in einer Verschwenkung nach rechts aus.

Ähnlich ist die Schaltung in den Figuren 7 und 8 ausgelegt. Hier sind die beiden Ausgangsleiter 37,38 lediglich je auf die Spule eines Relais R3 bzw. R4 geführt, welches den Neigungsschaltern N1 bzw. N2 nachgeschaltet ist. Deshalb kann auf die Schaltstellen 39 und 40 von Figur 6 verzichtet werden. Die stärker ausgezogenen Linien stellen Leiter dar, welche mit dem Pluspol der Spannungsquelle B verbunden sind. In Figur 7 ist der Schalter Sch1 auf Position A. Die Neigungsschalter N1 und N2 wie auch alle drei Sensoren Sch3,Sch4,Sch5 sind an die Spannungsquelle B angeschlossen. Die dargestellte Schaltsituation entspricht der Mäherstellung gemäss Figur 2. Der Sensor Sch4 und der Neigungsschalter N1 (bei Neigung nach rechts aktiviert) ist nicht aktiviert. Da der Sensor Sch5 aktiviert ist, sind beide Relais R3 und R4 geschlossen, es wäre daher eine Verschwenkung in beide Richtungen möglich. Jedoch verursacht der aufgrund der Abweichung von der Senkrechten 35 aktivierte Neigungsschalter N2 eine Verschwenkung nach rechts.

In Figur 8 ist das Schaltschema aus Figur 7 nochmals dargestellt, jedoch bei der Schalterposition Z des Schalters Sch1 für automatische Mittelstellung der Erzeugereinheit. Es sind demnach lediglich die Sensoren Sch3 und Sch4 unter Spannung. Die Neigungsschalter N1 und N2 sind umgangen. Nun wird eine Verschwenkung allein aufgrund der Aktivierung der Sensoren Sch3 und Sch4 ausgeführt. Im dargestellten Fall ist der Sensor Sch3 aktiviert, d.h. die Erzeugereinheit 13 ist in einer nach rechts verschwenkten Lage bezüglich der Normalstellung (siehe Figur 2). Nun wird aufgrund der Aktivierung des Sensors Sch3 die Erzeugereinheit nach links verschwenkt, denn der Sensor Sch3 schliesst das Relais R3, worauf Spannung auf das Relais R1 gelangt und daher auch R1 geschlossen wird. Dadurch wird das Magnetventil M1 an die Spannungsquelle angeschlossen und daher eine Verschwenkung nach links erwirkt. Sind dann beide Sensoren Sch3 und Sch4 deaktiviert (Figur 5), sind die Relais R3 und R4, und dadurch auch die Relais R1 und R2 geöffnet und die Ventile M1 und M2 daher geschlossen.

In analoger Weise sind auch Lagekorrekturen nach vorne und hinten steuerbar. Es braucht dazu lediglich eine zweite Verschwenkvorrichtung, welche in 90 Grad gedrehter Richtung unter oder auf die erste Verschwenkvorrichtung 17 gebaut ist.

Die Erfindung ist aber auch auf nicht fahrbare, jedoch im unebenen Gelände aufstellbare Erzeugereinheit 13 mit einem Verbrennungsmotor anwendbar. Diese können z.B. Stromaggregate, Druckluftkompressoren oder Wasserpumpen sein. In Figur 9 ist eine Notstromgruppe dargestellt, z.B. für Noteinsätze des Zivilschutzes oder der Feuerwehr. Diese erfindungsgemässe Notstromgruppe 43 richtet sich selbsttätig auf. Sie weist eine Erzeugereinheit 13' auf, welche in einem Support 19' angeordnet ist. Am Support 19' sind vier ausfahrbare Standbeine angeordnet, von welchen lediglich zwei (45,46) dargestellt sind. Sobald das Aggregat 43 Strom erzeugt, wird eine Steuerung der Standbeine mit Spannung versehen. Diese regelt mit 4 Neigungsschaltern, welche je einem Standbein zugeordnet sind, dass solange Spannung auf Elektromotoren, welche die Länge der Standbeine vergrössern, gegeben wird, bis die Erzeugereinheit 13 im Lot steht. Dazu brauchen die Neigungsschalter lediglich bei einer Neigung zum von ihnen gesteuerten Standbein hin aktiviert zu werden. Zweckmässigerweise sind die Standbeine von Hand rückstellbar.

Zusammenfassend kann gesagt werden, dass bei einem Motorgerät, z.B. einem Motormäher 11 für Berggebiete oder einem Stromaggregat 43 zum Aufstellen auf allenfalls unebenem Gelände 33, der Verbrennungsmotor 13,13' durch eine Steuerung mit Neigungsschaltern N1,N2 nach der Senkrechten 35 ausgerichtet wird. Dabei wird vorzugsweise die Verschwenkung des Motors derart ausgeführt, dass die Standfestigkeit des Geräts 11,43 bei ausgerichtetem Motor 13,13' besser ist als bei nicht ausgerichtetem.

## Patentansprüche

1. Verfahren zur Sicherstellung eines einwandfreien Betriebes eines fahrbaren oder im Gelände aufstellbaren Motorgeräts (11,43) mit einem Verbrennungsmotor (13,13'), dadurch gekennzeichnet, dass der laufende Motor (13,13') je nach der Richtung der auf das Gerät (11,43) wirkenden Schwer-/Fliehkraft wenigstens um eine Achse (31) verschwenkt wird und dadurch seine Lage auf die Richtung (35) der auf das Gerät (11,43) wirkenden Kraft wenigstens annähernd ausgerichtet wird.

2. Verfahren nach Anspruch 1, dadurch gekennzeichnet, dass der Motor (13,13') derart verschwenkt wird, dass die Standfestigkeit des Geräts (11,43) durch die Verschwenkung optimiert wird.

3. Verfahren nach Anspruch 1 oder 2 bei einem Gerät (11) mit einem den Motor (13) tragenden Support (19), dadurch gekennzeichnet, dass der Motor (13) gegenüber dem Support (19) verschwenkt wird.

4. Verfahren nach Anspruch 1 oder 2 bei einem Gerät (43) mit einem den Motor (13') tragenden Support (19'), dadurch gekennzeichnet, dass am Support (19') Stützbeine (45,46) soweit ausgefahren werden, bis das Gerät (43) in die Senkrechte verschwenkt ist.

5. Fahrbares oder im Gelände aufstellbares Motorgerät (11,43) mit einem Verbrennungsmotor (13,13'), gekennzeichnet durch eine Einrichtung (17,45,46) zum Verschwenken des Motors abhängig von der Richtung der auf das Gerät wirkenden Schwer-/Fliehkraft.

6. Gerät nach Anspruch 5, dadurch gekennzeichnet, dass die Schwenkachse (31) oder der Drehpunkt nahe der Fläche des Standbereichs liegt.

7. Gerät nach Anspruch 5 oder 6, gekennzeichnet durch eine oder mehrere hydraulische Pumpen am Motor (13) und wenigstens einem damit verbundenen hydraulischen Motor (21,22) für Antriebsräder (15,16) und/oder einem hydraulischen Motor oder Kolben für ein Arbeitsgerät und/oder wenigstens einem hydraulischen Motor oder Kolben (29,30) für die Verschwenkung des Motors (31).

8. Gerät nach Anspruch 7, mit einer Versteilpumpe und einer Füllpumpe für die Verstellpumpe, dadurch gekennzeichnet, dass für die Verschwenkung des Motors wenigstens ein von der Füllpumpe gespeister Kolben vorgesehen ist.

9. Gerät nach einem der Ansprüche 5 bis 8, dadurch gekennzeichnet, dass die Steuerung der Verschwenkung durch Neigungsschalter (N1,N2) kontrolliert ist.

10. Gerät nach Anspruch 9, gekennzeichnet durch wenigstens einen Sensor, vorzugsweise drei Sensoren (Sch3,Sch4,Sch5), zur Erkennung der Position des Motors (13) gegenüber einem Support (19), und durch eine elektrische oder elektronische Steuerung der Verschwenkung.

11. Gerät nach einem der Ansprüche 5 bis 10, dadurch gekennzeichnet, dass der Motor (13) mit Rollen (23,24) auf einer gewölbten Führungsschiene (25) gelagert ist.

12. Fahrbares Gerät nach einem der Ansprüche 5 bis 11, dadurch gekennzeichnet, dass die Bedienungs- und Steuerelemente um eine in Fahrtrichtung verlaufende Achse (31) zusammen mit dem Motor (13) verschwenkbar sind.

13. Einachsiges, fahrbares Gerät nach Anspruch 12, dadurch gekennzeichnet, dass die Bedienungs- und Steuerelemente zusammen mit dem durch den Motor (13) angetriebenen Arbeitsgerät um eine quer zur Fahrtrichtung verlaufende Achse gegenüber dem Motor verschwenkbar sind.

14. Gerät nach einem der Ansprüche 5 bis 13, mit angetriebenen Rädern (15,16), gekennzeichnet durch eine für jedes einzelne Rad (15,16) individuelle Steuerung des Antriebs (21,22), welche vorzugsweise abhängig von der Richtung der auf den Motor (13) wirkenden Schwerkraft und/oder Zentripetalkraft ist.
